# EUROPÄISCHE PATENTSCHRIFT

(11) **EP 2 626 512 B1**
(45) Veröffentlichungstag und Bekanntmachung des Hinweises auf die Patenterteilung: **12.04.2017**
(21) Anmeldenummer: 12154927.3
(22) Anmeldetag: 10.02.2012
(51) Int. Cl.: F01D 5/14, F01D 9/04, F04D 29/54

(54) **Strömungsmaschine**
Flow engine
Turbomachine

(43) Veröffentlichungstag der Anmeldung: 14.08.2013
(73) Patentinhaber: MTU Aero Engines AG, 80995 München (DE)
(72) Erfinder: Elorza Gomez, Sergio, 80997 München (DE); Schneider, Tim, 85221 Dachau (DE)

(56) Entgegenhaltungen:
- EP-A2- 2 261 463
- DE-A1- 3 924 829

## Beschreibung

Die Erfindung betrifft eine Strömungsmaschine nach dem Oberbegriff des Patentanspruchs 1.

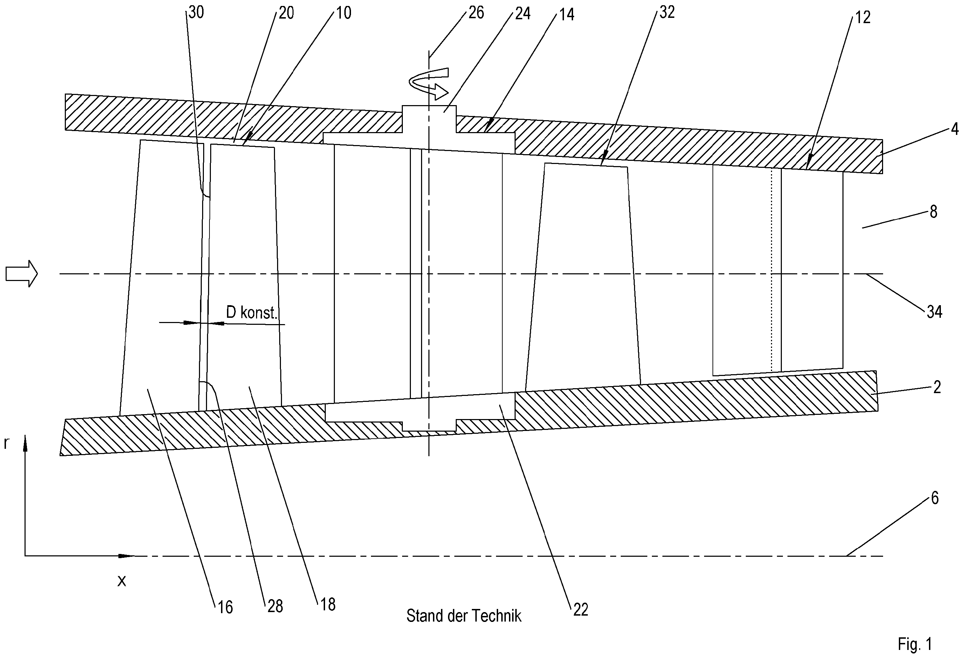

Die maximale Umlenkung einer Schaufelreihe einer Strömungsmaschine und somit deren aerodynamische Belastbarkeit ist zum einen durch eine Strömungsablösung am Schaufelprofil begrenzt. Zum anderen wird die maximale Umlenkung durch eine Ablösung einer Grenzschichtströmung an naben- und gehäuseseitigen Seitenwänden begrenzt. Zur Erhöhung der Umlenkfähigkeit von Schaufelreihen sind doppelreihige Schaufelanordnungen bekannt. Eine bekannte Strömungsmaschine mit einer derartigen Anordnung ist in Figur 1 gezeigt. Diese hat eine Nabe 2, die in einem Gehäuse 4 um eine sich in Längsrichtung x erstreckende Rotorachse 6 drehbar gelagert ist. Die Nabe 2 und das Gehäuse 4 begrenzen einen ringförmigen Hauptstrompfad 8, der gemäß dem waagerechten Pfeil von links nach rechts durchströmt wird und in dem beispielsweise eine rotorseitige Schaufelreihengruppe 10, eine statorseitige Schaufelreihengruppe 12 und eine verstellbare Schaufelreihengruppe 14 angeordnet ist. Die Schaufelreihengruppen 10, 12, 14 weisen jeweils zwei in Strömungsrichtung hintereinander angeordnete Schaufelreihen mit einer Vielzahl von Schaufeln 16, 18 auf. Aus Gründen der Übersichtlichkeit ist vorrangig die rotorseitige Schaufelreihengruppe 10 im Folgenden mit Bezugsziffern versehen. Die rotorseitige Schaufelreihengruppe 10 und die statorseitige Schaufelreihengruppe 12 sind jeweils fest mit der Nabe 2 bzw. mit dem Gehäuse 4 verbunden, wobei zwischen Blattspitzen der Schaufeln 16, 18 und dem Gehäuse 4 bzw. der Nabe 2 ein Spalt 20 gebildet ist. Die Schaufeln 16, 18 der verstellbaren Schaufelreihengruppe 14 sind endseitig jeweils an einem Drehteller 22, 24 gelagert und gemäß dem Drehpfeil um eine Querachse 26 verschwenkbar. Die vorderen Schaufeln 16 haben jeweils eine den hinteren Schaufeln 18 zugewandte Hinterkante 28. Die hinteren Schaufeln 18 haben jeweils eine der vorderen Schaufeln 16 zugewandte Vorderkante 30. Die Kanten 28, 30 sind geradlinig ausgebildet und erstrecken sich radial nahezu quer zur Hauptstromrichtung, so dass zwischen den Kanten 28, 30 und somit zwischen den Schaufeln 16, 18 ein konstanter axialer Kantenabstand D_{könst} gebildet ist. Ferner ist in Figur 1 eine Schaufel 32 einer einzelnen Rotorschaufelreihe gezeigt.

Es hat sich jedoch gezeigt, dass im Seitenwandbereich, d.h. im Bereich der Nabe 2 und/oder des Gehäuses 4 aufgrund des Grenzschichteneinflusses eine von einer Hauptstrompfadmitte 34 abweichende Schaufelkonturierung notwendig ist, mittels welcher die gegenüber der Hauptstrompfadmitte 34 geänderten Strömungsbedingungen im Seitenwandbereich berücksichtigt werden können. In der gattungsbildenden EP 2 261 463 A2 wird daher bei Schaufelreihengruppen vorgeschlagen, einen meridionalen Abstand zwischen den Hinterkanten der vorderen Schaufeln und den Vorderkanten der hinteren Schaufeln derart einzustellen, dass dieser von einer Hauptstrompfadmitte in Richtung einer naben- oder gehäuseseitigen Seitenwand zunimmt.

Der Vollständigkeit halber sei zudem auch noch auf die Druckschrift DE 39 24 829 A1 hingewiesen.

Aufgabe der Erfindung ist es, eine Strömungsmaschine mit optimierten Strömungsverhältnissen zu schaffen.

Diese Aufgabe wird gelöst durch eine Strömungsmaschine mit den Merkmalen des Patentanspruchs 1.

Eine erfindungsgemäße Strömungsmaschine hat zumindest eine Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln aufweist. Erfindungsgemäß sind die Hinterkanten der Schaufel der stromaufwärtigen Schaufelreihe und die Vorderkanten der Schaufel der stromabwärtigen Schaufelreihe in einem axialen Kantenabstand angeordnet, der ausgehend von einer Hauptstrompfadmitte in Richtung zumindest einer Hauptstrombegrenzung abnimmt.

Durch den ausgehend von der Hauptstrompfadmitte in Richtung zumindest einer Hauptstrombegrenzung abnehmenden axialen Kantenabstand wird die Positionierung der Schaufeln zueinander und deren Interaktion an die Hauptströmung im Seitenwandbereich angepasst, wodurch eine ablösungsfreie Schaufelreihendurchströmung begünstigt wird. Der axiale Kantenabstand ist nicht konstant, sondern variierend ausgeführt, wobei er erfindungsgemäß zwischen der Hauptstrompfadmitte und der Hauptstrombegrenzung einen Wert annimmt, der kleiner ist als sein Wert auf der Hauptstrompfadmitte. Mit anderen Worten: Durch die radiale Änderung der Schaufelanordnung, erfindungsgemäß deren axiale Überdeckung bzw. Beabstandung, werden geänderte Strömungsrandbedingungen im Seitenwandbereich berücksichtigt und Strömungsablösungen im Seitenwandbereich vermindert.

Erfindungsgemäß nimmt der Kantenabstand in Richtung eines an der Hauptstrombegrenzung liegenden Minimums stetig ab; oder
nimmt der Kantenabstand bis zu einem Minimum ab und danach in Richtung der Hauptstrombegrenzung zu, wobei der Kantenabstand an der zumindest einen Hauptstrombegrenzung kleiner oder gleich dem Kantenabstand in der Hauptstrompfadmitte ist; oder nimmt der Kantenabstand bis zu einem Minimum ab und verläuft dann bis zur zumindest einen Hauptstrombegrenzung konstant.

Bei sämtlichen Ausführungsbeispielen kann der variierende Kantenabstand dadurch erreicht werden, dass die Hinterkanten einen linearen Verlauf und die Vorderkanten einen kurvenartigen Verlauf haben.

Alternativ können die Hinterkanten einen kurvenartigen Verlauf und die Vorderkanten einen linearen Verlauf aufweisen.

Des Weiteren können alternativ die Hinterkanten und die Vorderkanten einen kurvenartigen Verlauf aufweisen.

Ferner können die Hinterkanten und/oder die Vorderkanten sowohl zumindest einen kurvigen Abschnitt als auch zumindest einen linearen bzw. geradlinigen Abschnitt haben, so dass sie sowohl zumindest einen kurvenartigen Verlauf bzw. Kantenabschnitt als auch zumindest einen linearen Verlauf bzw. Kantenabschnitt aufweisen.

Erfindungsgemäß nimmt der Kantenabstand in Richtung beider Hauptstrombegrenzungen ab.

Dabei kann bei dem letzten Ausführungsbeispiel der Kantenverlauf in Richtung der Hauptstrombegrenzungen identisch sein oder variieren.

Um eine eventuelle Asymmetrie der Kantenverläufe in Richtung der rotorseitigen Hauptstrombegrenzung und der statorseitigen Hauptstrombegrenzung zu berücksichtigen, können die Hinterkanten und die Vorderkanten die Hauptstrompfadmitte in einem Winkel ϕ=90° oder ϕ≠90° schneiden.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: einen Längsschnitt durch einen Hauptstrompfad einer bekannten Strömungsmaschine,
- Figur 2: eine Definition eines axialen Kantenabstandes im Sinne der Erfindung,
- Figur 3: Ausführungsbeispiele einer erfindungsgemäßen Schaufelreihengruppe,
- Figur 4: weitere Ausführungsbeispiele der erfindungsgemäßen Schaufelreihengruppe,
- Figur 5: ein weiteres Ausführungsbeispiel einer erfindungsgemäßen Schaufelreihengruppe, und
- Figur 6: weitere Ausführungsbeispiele der erfindungsgemäßen Schaufelreihengruppe.

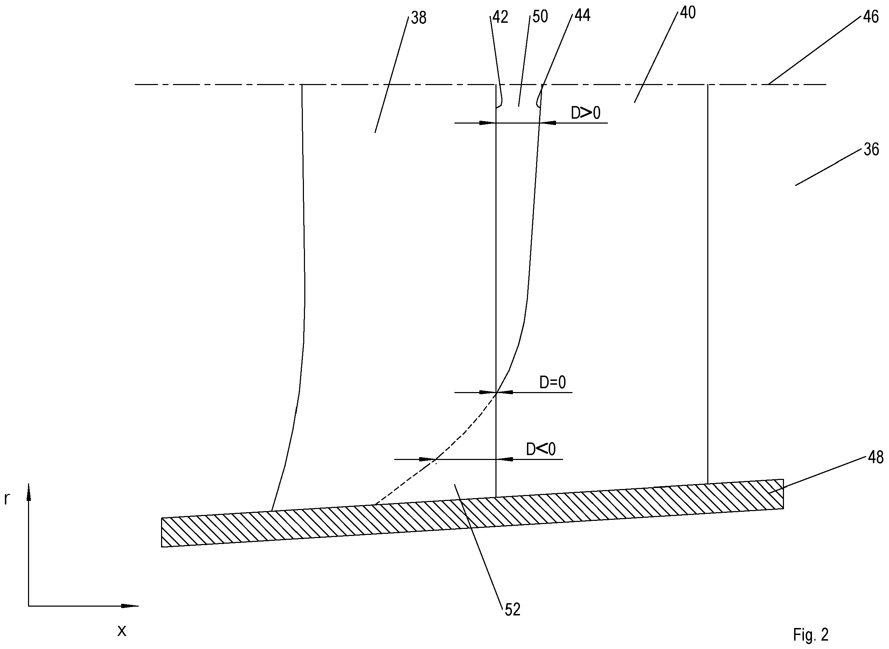

Figur 2 zeigt einen Längsschnitt durch einen Hauptstrompfad 36 einer Strömungsmaschine, beispielsweise eine stationäre Gasturbine oder ein Flugzeugtriebwerk, zur Verdeutlichung eines erfindungsgemäßen axialen Kantenabstandes D einer Schaufelreihengruppe. Die Schaufelgreihengruppe hat zumindest zwei in Hauptstromrichtung benachbarte Schaufelreihen mit jeweils einer Vielzahl von Schaufeln 38, 40. Der Kantenabstand D wird in axialer Richtung und somit in Hauptstromrichtung zwischen einer Hinterkante HK(i) 42 der stromaufwärtigen bzw. vorderen Schaufel 38 und einer Vorderkante VK(i+1) 44 der stromabwärtigen bzw. hinteren Schaufel 40 abgetragen. Erfindungsgemäß nimmt der Kantenabstand D von einer Hauptstrompfadmitte bzw. einer Mittelschnittlinie 46 über zumindest einen Bereich der radialen Höhe des Hauptstrompfads 36 in Richtung zumindest einer Hauptstrombegrenzung 48 ab. Die Hauptstrombegrenzung 48 stellt einen naben- oder gehäuseseitigen Bereich der Strömungsmaschine dar und ist zum Beispiel unmittelbar ein Naben- oder Gehäuseabschnitt oder ein Schaufeldeckband.

Der axiale Kantenabstand D kann Werte größer Null (positive Werte D>0), gleich Null (D =0) oder kleiner Null (negative Werte D<0) annehmen. Wenn der Kantenabstand D positive Werte annimmt, ist zwischen den Kanten 42,44 ein axialer Freiraum 50 gebildet. Wenn der Kantenabstand D negative Werte annimmt, befinden sich die Schaufeln 38, 40 in Überdeckung 52. Der Begriff "abnehmen" bedeutet dabei sowohl eine Verringerung der positiven Werte als auch einen Übergang von den positiven auf die negativen Werte sowie einen betragsmäßigen Anstieg der negativen Werte. Der Verlauf der Kanten 42,44 in Richtung der Hauptstrompfadbegrenzung 48 kann variieren, jedoch ist der Kantenabstand D auf der Hauptstrompfadmitte 46 stets größer als in einem Bereich zwischen der Hauptstrompfadmitte 46 und zumindest einer der beiden Hauptstrombegrenzungen 48.

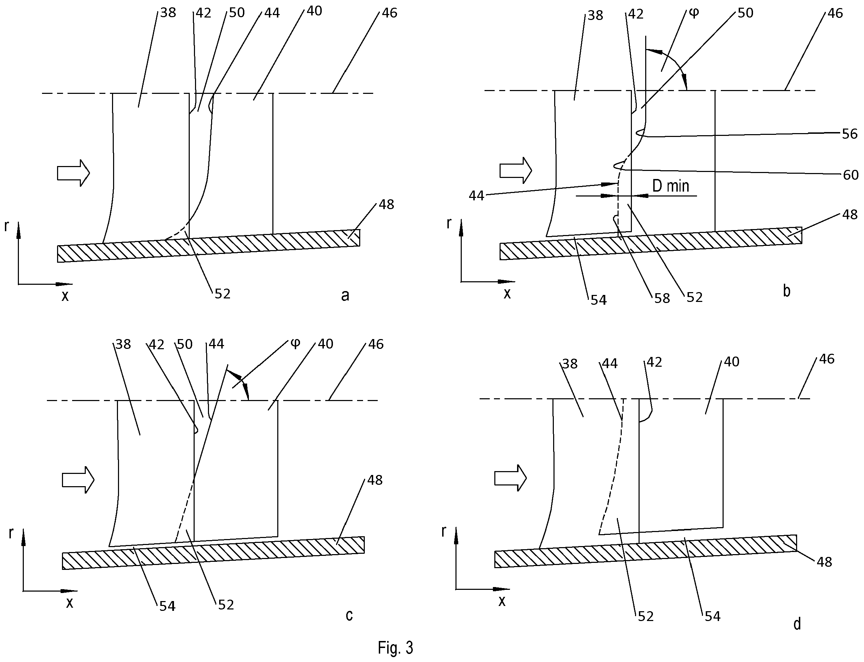

In Figur 3 sind vier Ausführungsbeispiele der erfindungsgemäßen Schaufelreihengruppe gezeigt. In den in den Segmenten a, b, c und d gezeigten Ausführungsbeispielen ist die Hinterkante 42 jeder vorderen Schaufel 38 geradlinig und radial quer verlaufend zur Hauptstrompfadmitte 46 orientiert. Die Vorderkante 44 jeder hinteren Schaufel 40 hat einen kurvenförmigen Verlauf oder ist bei einem geradlinigen Verlauf in einem Winkel ϕ≠90° zur Hauptstrompfadmitte 46 angestellt.

Bei dem im Segment a gezeigten Ausführungsbeispiel sind die Schaufeln 38, 40 in Radialrichtung spaltdicht zur Hauptstrombegrenzung 48 angeordnet. Die Vorderkante 44 der jeweils hinteren Schaufel 40 ist kurvenförmig ausgebildet, wobei sie ausgehend von der Hauptstrompfadmitte 46 in Richtung der Hauptstrombegrenzung 48 stromaufwärts orientiert ist. Ihr Kurvenradius nimmt dabei in Richtung der Hauptstrombegrenzung 48 stetig ab. Insbesondere sind die Kanten 42, 44 im Bereich der Hauptstrompfadmitte 46 über einen axialen Freiraum 50 voneinander beabstandet, so dass der axiale Kantenabstand D positive Werte annimmt. Durch den kurvenförmigen Verlauf verkleinert sich der Kantenabstand D in Richtung der Hauptstrombegrenzung 34, wobei die Schaufeln im Bereich der Hauptstrombegrenzung 48 eine axiale Überdeckung 52 bilden. Dabei nimmt der axiale Kantenabstand D seinen minimalen Wert Dₘᵢₙ unmittelbar an der Hauptstrombegrenzung 48 an.

Bei dem im Segment b gezeigten Ausführungsbeispiel sind die vorderen Schaufeln 38 über einen Radialspalt 54 von der Hauptstrombegrenzung 48 beabstandet. Die hinteren Schaufeln 40 sind spaltdicht zur Hauptstrombegrenzung 48 angeordnet. Die Vorderkante 44 der jeweils hinteren Schaufeln 40 hat einen kurvenartigen Verlauf mit einem geradlinigen radial äußeren Abschnitt 56, einem geradlinigen radial inneren Abschnitt 58 und mit einem Kurvenabschnitt 60.

Die geradlinigen Abschnitte 56, 58 sind parallel zur Hinterkante 42 der jeweils vorderen Schaufel 38 quer zur Hauptstrompfadmitte 46 angeordnet. Insbesondere ist der radial äußere Abschnitt 56 in einem Winkel ϕ=90°. zur Hauptstrompfadmitte 34 orientiert. Zwischen dem inneren Abschnitt 56 und der Hinterkante 42 ist ein axialer Freiraum 50 gebildet, so dass der Kantenabstand D positive Werte annimmt. Aufgrund der Parallelausrichtung des äußeren Abschnitts 56 zur Hinterkante 42 nimmt der Kantenabstand D nicht nur auf der Hauptstrompfadmitte 46 seinen maximalen Wert an, sondern ist über den gesamten Freiraum 50 konstant maximal. Der innere Abschnitt 58 ist stromaufwärts des äußeren Abschnitts 56 derart angeordnet, dass die Schaufeln 38, 40 eine axiale Überdeckung 52 bilden und somit der Kantenabstand D negative Werte annimmt. Aufgrund der parallelen Ausrichtung des inneren Abschnitts 58 zur Hinterkante 42 ist der axiale Kantenabstand D über den gesamten inneren Abschnitt 58 konstant, so dass der minimale Kantenabstand Dₘᵢₙ kein lokales Minimum darstellt, sondern quasi über die gesamte Überdeckung 52 konstant minimal ist.

Die Verbindung der beiden Abschnitte 56, 58 erfolgt in etwa auf halber radialer Höhe zwischen der Hauptstrompfadmitte 46 und der Hauptstrombegrenzung 48 mittels des Kurvenabschnitts 60, der hierzu ausgehend von dem äußeren Abschnitt 56 in Richtung der Hauptstrombegrenzung 48 stromaufwärts orientiert ist.

Bei dem im Segment c gezeigten Ausführungsbeispiel sind die vorderen Schaufeln 38 und die hinteren Schaufeln 40 über einen Radialspalt 54 von der Hauptstrombegrenzung 48 beabstandet. Die Vorderkante 44 der jeweils hinteren Schaufel 40 ist geradlinig ausgebildet. Sie ist ausgehend von der Hauptstrommitte 46 in Richtung der Hauptstrombegrenzung 48 in einem Winkel ϕ≠90° quer zur Hauptstrompfadmitte 46 stromaufwärts angestellt. Insbesondere ist ausgehend von der Hauptstrompfadmitte 46 zwischen den Kanten 38, 40 ein axialer Freiraum 50 gebildet, der sich keilförmig in Richtung der Hauptstrombegrenzung 48 verjüngt und somit schließt. Der axiale Kantenabstand D nimmt sich konstant verkleinernde positive Werte an, wobei etwa auf halben radialen Höhenbereich der Kantenabstand den Wert Null annimmt und der axiale Freiraum 50 geschlossen ist. Nach dem Schließen des Freiraums 50 bilden die Schaufeln 42,44 eine axiale Überdeckung 52. Der axiale Kantenabstand D nimmt im weiteren Verlauf in Richtung der Hauptstrompfadbegrenzung 48 konstant steigende negative Werte an, wodurch die Überdeckung 52 dreieckig ausgebildet ist und der minimale Kantenabstand Dₘᵢₙ nahe der Hauptstrombegrenzung 48 liegt.

Bei dem im Segment d gezeigten Ausführungsbeispiel sind die vorderen Schaufeln 38 spaltdicht zur Hauptstrombegrenzung 48 angeordnet. Die hinteren Schaufeln 40 sind über einen Radialspalt 54 von der Hauptstrombegrenzung 48 beabstandet. Die Vorderkante 44 der hinteren Schaufel 40 hat einen kurvenförmigen Verlauf mit etwa einem konstanten Kurvenradius. Ausgehend von der Hauptstrompfadmitte 46 in Richtung der Hauptstrombegrenzung 48 ist die Vorderkante 40 stromaufwärts orientiert. Im wesentlichen Unterschied zu dem im Segment a gezeigten Ausführungsbeispiel ist bereits auf der Hauptstrompfadmitte 46 eine Überdeckung 52 der Schaufeln 42, 44 gebildet. Der axiale Kantenabstand D hat somit bereits auf der Hauptstrompfadmitte 46 einen negativen Wert, der sich aufgrund des kurvenförmigen und stromaufwärtigen Verlaufs in Richtung der Hauptstrombegrenzung 48 vergrößert. Der minimale axiale Kantenabstand Dₘᵢₙ befindet sich folglich nahe der Hauptstrombegrenzung 48.

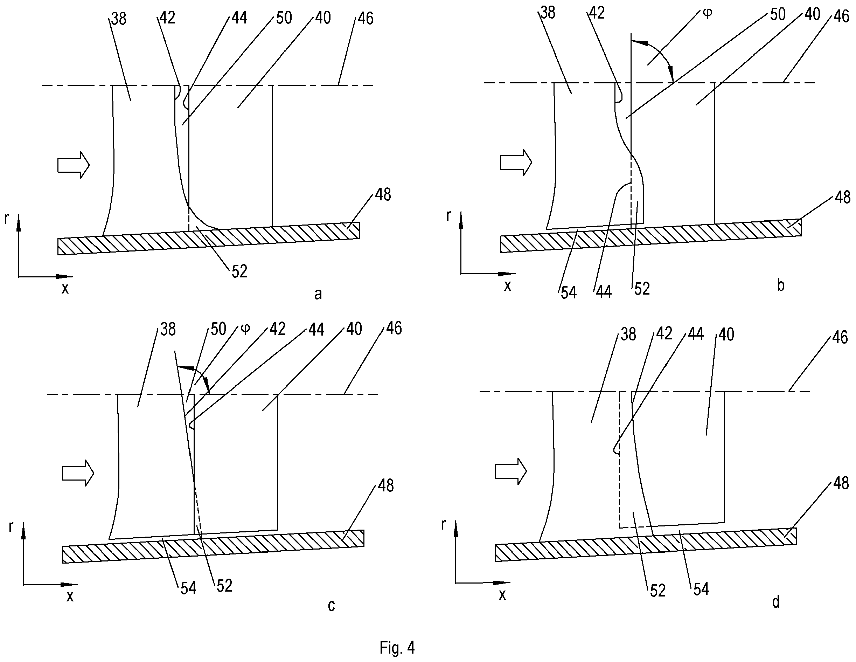

In Figur 4 sind vier weitere Ausführungsbeispiele der erfindungsgemäßen Schaufelreihengruppe gezeigt. In den in den Segmenten a, b, c und d gezeigten Ausführungsbeispielen hat die Hinterkante 42 jeder vorderen Schaufel 38 einen kurvenförmigen Verlauf oder ist bei einem geradlinigen Verlauf in einem Winkel ϕ≠90° zur Hauptstrompfadmitte 46 angestellt. Die Vorderkante 44 jeder hinteren Schaufel 40 ist geradlinig und radial nahezu quer verlaufend zur Hauptstrompfadmitte 46 ausgerichtet. Im Unterschied zu den Schaufelreihengruppen nach Figur 3 ist bei den Schaufelreihengruppen nach Figur 4 der Verlauf der Kanten 42, 44 pro Segment a, b, c, d vertauscht, so dass weitere detaillierte Ausführungen entfallen. Es sei lediglich erwähnt, dass aufgrund dieser Vertauschung die Kurvenverläufe die Hinterkanten 42 ausgehend von der der Hauptstrompfadmitte 46 in Richtung der Hauptsstrombegrenzung 48 stromabwärts orientiert sind. Die Lage des jeweils axialen minimalen Kantenabstands Dₘᵢₙ bleibt von der Vertauschung unberührt, so dass bei dem im Segment a gezeigten Ausführungsbeispiel der minimale Kantenabstand Dₘᵢₙ an der Hauptstrombegrenzung 48, bei dem im Segment b gezeigten Ausführungsbeispiel nahezu über die gesamte Überdeckung 52, bei dem im Segment c gezeigten Ausführungsbeispiel nahe der Hauptstrombegrenzung 48, und bei dem im Segment d gezeigten Ausführungsbeispiel ebenfalls nahe der Hauptstrombegrenzung 48 gebildet ist.

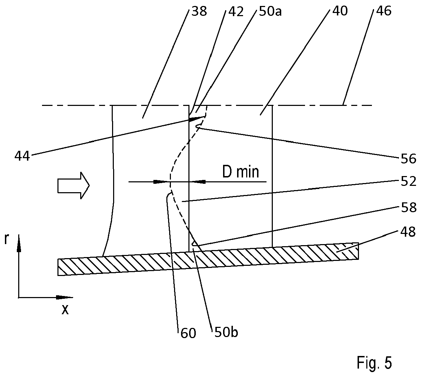

Bei dem in Figur 5 gezeigten Ausführungsbeispiel einer erfindungsgemäßen Schaufelreihengruppe sind die Schaufeln 38,40 in Radialrichtung spaltdicht zur Hauptstrombegrenzung 48 angeordnet. Die Hinterkante 42 der jeweils vorderen Schaufel 38 ist geradlinig und radial quer verlaufend zur Hauptstrompfadmitte 46 orientiert. Die Vorderkante 44 der jeweils hinteren Schaufel 40 hat einen kurvigen und insbesondere einen bauchigen Verlauf. Im Bereich der Hauptstrompfadmitte 46 und im Bereich der Hauptstrombegrenzung 48 ist zwischen den Kanten 42, 44 ein axialer radial außenliegender Freiraum 50a und ein axialer innenliegender Freiraum 50b geschaffen. Somit nimmt der axiale Kantenabstand D hier positive Werte an, wobei der Kantenabstand einen maximalen Wert auf der Hauptstrompfadmitte 46 annimmt. Somit hat der außenliegende Freiraum 50a eine größere axiale Erstreckung als der innenliegende Freiraum 50b.

Die beiden Freiräume 50a, 50b sind über eine axiale bauchige Überdeckung 52 der beiden Schaufeln 38, 40 in radialer Richtung voneinander getrennt. Somit nimmt der axiale Kantenabstand D zwischen den Freiräumen 50a, 50b negative Werte an, wobei ein minimaler Kantenabstand Dₘᵢₙ auf halber Höhe zwischen der Hauptstrombegrenzung 48 und der Hauptpfadmitte 46 gebildet ist. Zur Bildung der Überdeckung 52 hat die Vorderkante 42 einen Kurvenabschnitt 60, der gegenüber angrenzenden Kantenabschnitten 56, 58 stromaufwärts orientiert ist.

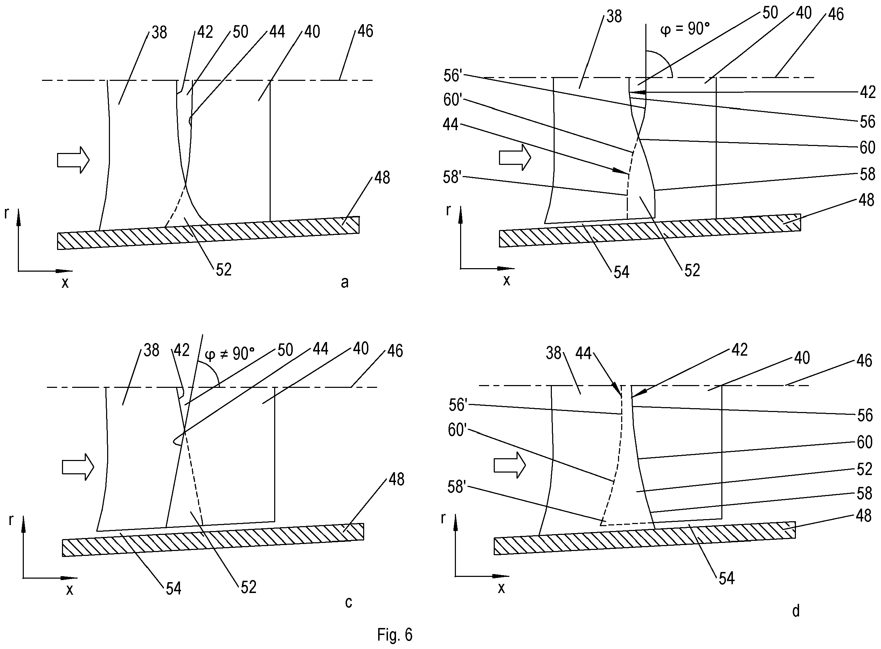

In Figur 6 sind vier weitere Ausführungsbeispiele der erfindungsgemäßen Schaufelreihengruppe gezeigt. In den in den Segmenten a, b, c und d gezeigten Ausführungsbeispielen sind im Unterschied zu den vorgehenden Ausführungsbeispielen sowohl die Hinterkanten 42 als auch die Vorderkanten 44 mit einer Kantenvariation versehen oder bei geradliniger Ausbildung in einem Winkel ϕ≠90° zur Hauptstrompfadmitte 46 angestellt.

Bei dem im Segment a gezeigten Ausführungsbeispiel sind die Schaufeln 38, 40 in Radialrichtung spaltdicht zur Hauptstrombegrenzung 48 angeordnet. Die Hinterkante 42 der jeweils vorderen Schaufel 38 ist kurvenförmig, wobei sie ausgehend von der Hauptstrompfadmitte 46 in Richtung der Hauptstrombegrenzung 48 stromabwärts orientiert ist. Die Vorderkante 44 der jeweils hinteren Schaufel 40 ist kurvenförmig ausgebildet, wobei sie ausgehend von der Hauptstrompfadmitte 46 in Richtung der Hauptstrombegrenzung 48 stromaufwärts orientiert ist. Der Kurvenradius der Hinterkanten 42 und der der Vorderkante 44 nehmen in Richtung der Hauptstrombegrenzung 48 stetig ab. Zudem sind die Kanten 42, 44 im Bereich der Hauptstrompfadmitte 46 über einen axialen Freiraum 50 voneinander beabstandet, so dass der axiale Kantenabstand D positive Werte annimmt. Durch den kurvenförmigen Verlauf beider Kanten 42, 44 verkleinert sich der Kantenabstand D in Richtung der Hauptstrombegrenzung 34, wobei die Schaufeln 38, 40 im Bereich der Hauptstrombegrenzung 48 eine axiale Überdeckung 52 bilden. Dabei nimmt der axiale Kantenabstand D seinen minimalen Wert Dₘᵢₙ unmittelbar an der Hauptstrombegrenzung 48 an.

Bei dem im Segment b gezeigten Ausführungsbeispiel sind die vorderen Schaufeln 38 über einen Radialspalt 54 von der Hauptstrombegrenzung 48 beabstandet. Die hinteren Schaufeln 40 sind spaltdicht zur Hauptstrombegrenzung 48 angeordnet. Die Hinterkanten 42 der vorderen Schaufeln 38 und die Vorderkanten 44 der hinteren Schaufeln 40 haben jeweils einen kurvenartigen Verlauf mit einem geradlinigen radial äußeren Abschnitt 56, 56', einem geradlinigen radial inneren Abschnitt 58, 58' und mit einem Kurvenabschnitt 60, 60'.

Die geradlinigen Abschnitte 56, 56' und 58, 58' sind parallel zueinander verlaufend quer zur Hauptstrompfadmitte 46 angeordnet. Insbesondere sind die radial äußeren Abschnitt 56, 56' in einem Winkel ϕ=90°. zur Hauptstrompfadmitte 34 orientiert. Zwischen den inneren Abschnitten 56,56' ist ein axialer Freiraum 50 gebildet, so dass der Kantenabstand D positive Werte annimmt. Aufgrund der Parallelausrichtung der äußeren Abschnitte 58, 58' nimmt der Kantenabstand D nicht nur auf der Hauptstrompfadmitte 46 seinen maximalen Wert an, sondern ist im Prinzip über den gesamten Freiraum 50 konstant maximal. Der innere Abschnitt 58 der vorderen Schaufel 38 ist stromabwärts des äußeren Abschnitts 56 der vorderen Schaufel 38 angeordnet. Der innere Abschnitt 58' der hinteren Schaufel 40 ist stromaufwärts des äußeren Abschnitts 56' der hinteren Schaufel 40 angeordnet. Somit ist in dem gezeigten Ausfuhrungsbeispiel der innere Abschnitt 58 der vorderen Schaufel 38 stromabwärts des inneren Abschnitts 58' der hinteren Schaufel 40 angeordnet. Durch die hierdurch gebildete Versetzung der inneren Abschnitte 58, 58' zueinander bilden diese eine axiale Überdeckung 52 mit einem negativen Kantenabstand D. Die Überdeckung 52 ist derart, dass der betragsmäßige Kantenabstand D im Bereich der inneren Abschnitte 58, 58 größer ist als der Kantenabstand D im Bereich der äußeren Abschnitte 58, 58. Aufgrund der Parallelausrichtung der inneren Abschnitts 58, 58' ist der axiale Kantenabstand D über die gesamten inneren Abschnitte 58, 58' konstant, so dass der minimale Kantenabstand Dₘᵢₙ kein lokales Minimum ist, sondern quasi über die gesamte Überdeckung 52 konstant minimal ist.

Die Verbindung der beiden Abschnitte 56, 58 und 56', 58' erfolgt in etwa auf halber radialer Höhe zwischen der Hauptstrompfadmitte 46 und der Hauptstrombegrenzung 48 mittels der Kurvenabschnitte 60, 60', die zur Ausbildung der Überdeckung 52 ausgehend vom jeweiligen äußeren Abschnitt 56, 56' in Richtung der Hauptstrombegrenzung 48 stromabwärts (Kurvenabschnitt 60 der vorderen Schaufel 38) oder stromaufwärts (Kurvenabschnitt 60' der hinteren Schaufel 40) orientiert sind.

Bei dem im Segment c gezeigten Ausführungsbeispiel sind die vorderen Schaufeln 38 und die hinteren Schaufeln 40 jeweils über einen Radialspalt 54 von der Hauptstrombegrenzung 48 beabstandet. Ihre Hinterkanten 42 und Vorderkanten 44 sind jeweils geradlinig ausgebildet und in einem Winkel ϕ≠90° quer zur Hauptstrompfadmitte 46 angestellt. In dem gezeigten Ausführungsbeispiel sind ausgehend von der Hauptstrommitte 46 in Richtung der Hauptstrombegrenzung 48die Hinterkanten 42 stromabwärts und die Vorderkanten 44 stromaufwärts um den betragsmäßig gleichen Winkeln orientiert. Ausgehend von der Hauptstrompfadmitte 46 ist zwischen den Kanten 38, 40 ein axialer Freiraum 50 gebildet, der sich keilförmig in Richtung der Hauptstrombegrenzung 48 verjüngt und somit schließt. Der axiale Kantenabstand D nimmt sich konstant verkleinernde positive Werte an, wobei nach etwa einem Drittel des radialen Höhenbereichs zwischen der Hauptstrompfadmitte 46 und der Hauptstrombegrenzung 48 der Kantenabstand D den Wert Null annimmt und der axiale Freiraum 50 somit geschlossen ist. Nach dem Schließen des Freiraums 50 bilden die Schaufeln 38, 40 bzw. deren Kanten 42,44 eine axiale Überdeckung 52. Der axiale Kantenabstand D nimmt im weiteren Verlauf in Richtung der Hauptstrompfadbegrenzung 48 konstant steigende negative Werte an, wobei aufgrund der geradlinigen Ausbildung der Kanten 42,44 und deren bertagsmäßig gleichen Anstellwinkeln zur Hauptstrompfadmitte 46 die Überdeckung 52 als ein gleichschenkeliges Dreieck ausgebildet ist und der minimale Kantenabstand Dₘᵢₙ nahe der Hauptstrombegrenzung 48 liegt.

Bei dem im Segment d gezeigten Ausführungsbeispiel sind die vorderen Schaufeln 38 spaltdicht zur Hauptstrombegrenzung 48 angeordnet. Die hinteren Schaufeln 40 sind über einen Radialspalt 54 von der Hauptstrombegrenzung 48 beabstandet. Die Hinterkanten 42 der vorderen Schaufeln 38 und die Vorderkanten 44 der hinteren Schaufeln 40 haben jeweils einen kurvenartigen Verlauf mit einem geradlinigen radial äußeren Abschnitt 56, 56', einem geradlinigen radial inneren Abschnitt 58, 58' und mit einem Kurvenabschnitt 60, 60'. Die axiale Positionierung der Schaufeln 38, 40 zueinander und ihre Kantenverläufe sind derart, dass bereits auf der Hauptstrompfadmitte 46 eine axiale Überdeckung 52 gebildet ist, die sich dann zunehmend bis zum Radialspalt 54 erstreckt. Der axiale Kantenabstand D hat somit bereits auf der Hauptstrompfadmitte 46 einen negativen Wert, der sich in Richtung der Hauptstrombegrenzung 48 vergrößert. Der minimale axiale Kantenabstand Dₘᵢₙ befindet sich folglich nahe der Hauptstrombegrenzung 48.

Der jeweilige Kantenverlaufist derart, dass sich von der Hauptstrompfadmitte 46 in Richtung der Hauptstrombegrenzung 48 betrachtet die inneren Abschnitte 56, 56' sowie die äußeren Abschnitte 58, 58' voneinander entfernen. Die Kurvenabschnitte 60, 60' befinden sich in etwa auf halbem radialen Höhenbereich zwischen der Hauptstrompfadmitte 46 und der Hauptstrombegrenzung 48 und sind stromaufwärts (Kurvenabschnitt 60' der hinteren Schaufel 40) oder stromabwärts (Kurvenabschnitt 60 der vorderen Schaufel 38) orientiert. Aufgrund der Orientierung der inneren Abschnitte 56, 56', der äußeren Abschnitte 58, 58' und der Kurvenabschnitte 60, 60' sind die Hinterkanten 42 der vorderen Schaufeln 38 somit ausgehend von der Hauptstrompfadmitte 46 stromabwärts und die Vorderkanten 44 der hinteren Schaufeln 40 stromaufwärts orientiert.
Offenbart ist eine Strömungsmaschine mit zumindest einer Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln aufweist, wobei die Hinterkanten der Schaufeln der stromaufwärtigen Schaufelreihe und die Vorderkanten der Schaufeln der stromabwärtigen Schaufelreihe in einem axialen Kantenabstand angeordnet sind, der ausgehend von einer Hauptstrompfadmitte in Richtung zumindest einer Hauptstrombegrenzung abnimmt.

### Bezugszeichenliste

- 2: Nabe
- 4: Gehäuse
- 6: Rotorachse
- 8: Hauptstrompfad
- 10: rotorseitige Schaufelreihengruppe
- 12: statorseitige Schaufelreihengruppe
- 14: verstellbare Schaufelreihengruppe
- 16: Schaufel
- 18: Schaufel
- 20: Spalt
- 22: Drehteller
- 24: Drehteller
- 26: Querachse
- 28: Hinterkante
- 30: Vorderkante
- 32: Schaufel
- 34: Hauptstrompfadimitte
- 36: Hauptstrompfad
- 38: vordere Schaufel
- 40: hintere Schaufel
- 42: Hinterkante
- 44: Vorderkante
- 46: Hauptstrompfadmitte
- 48: Hauptstrombegrenzung
- 50, a, b: Freiraum
- 52: Überdeckung
- 54: Radialspalt
- 56: Kantenabschnitt
- 58: Kantenabschnitt
- 60: Kurvenabschnitt
- D: axialer Kantenabstand

## Patentansprüche

1. Strömungsmaschine mit zumindest einer Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln (38, 40) aufweist, **dadurch gekennzeichnet, dass** die Hinterkanten (42) der Schaufeln (38) der stromaufwärtigen Schaufelreihe und die Vorderkanten (44) der Schaufeln (40) der stromabwärtigen Schaufelreihe in einem axialen Kantenabstand (D) angeordnet sind, der ausgehend von einer Hauptstrompfadmitte (46) in Richtung beider Hauptstrombegrenzungen (48) abnimmt, wobei jeweils der Kantenabstand (D) in Richtung eines an der Hauptstrombegrenzung (48) liegenden Minimums stetig abnimmt;
oder der Kantenabstand (D) bis zu einem Minimum abnimmt und danach in Richtung der Hauptstrombegrenzung (48) zunimmt, wobei der Kantenabstand (D) an der Hauptstrombegrenzung (48) kleiner oder gleich dem Kantenabstand (D) in der Hauptstrompfadmitte (46) ist;
oder der Kantenabstand (D) bis zu einem Minimum abnimmt und dann bis zur Hauptstrombegrenzung (48) konstant verläuft.

2. Strömungsmaschine nach Anspruch 1, wobei die Hinterkanten (42) einen linearen Verlauf und die Vorderkanten (44) einen kurvenartigen Verlauf haben.

3. Strömungsmaschine nach Anspruch 1, wobei die Hinterkanten (42) einen kurvenartigen Verlauf und die Vorderkanten (44) einen linearen Verlauf haben.

4. Strömungsmaschine nach Anspruch 1, wobei die Hinterkanten (42) und die Vorderkanten (44) einen kurvenartigen Verlauf haben.

5. Strömungsmaschine nach Anspruch 1, wobei die Hinterkanten (42) und/oder die Vorderkanten (44) sowohl zumindest einen kurvenartigen Verlauf als auch zumindest einen linearen Verlauf haben.

6. Strömungsmaschine nach einem der vorhergehenden Ansprüche, wobei der Kantenverlauf in Richtung der Hauptstrombegrenzungen (48) identisch ist oder variiert.

7. Strömungsmaschine nach einem der vorhergehenden Ansprüche, wobei die Hinterkanten (42) und die Vorderkanten (44) die Hauptstrompfadmitte (46) in einem Winkel ϕ=90° oder ϕ≠90° schneiden.

## Claims

1. Turbomachine with at least one group of blade rows that is arranged in a main flow path and has at least two rows of blades that are adjacent when seen in the main direction of flow, each with a plurality of blades (38, 40), **characterized in that** the rear edges (42) of the blades (38) of the upstream row of blades and the front edges (44) of the blades (40) of the downstream row of blades are arranged with axial edge spacing (D) that decreases starting from a center of the main flow path (46) in the direction of the two main flow boundaries (48), with the edge spacing (D) decreasing constantly in the direction of a minimum lying at the main flow boundary (48);
or the edge spacing (D) decreases to a minimum and then increases in the direction of the main flow boundary (48), with the edge spacing (D) at the main flow boundary (48) being less than or equal to the edge spacing (D) in the center of the main flow path (46);
or the edge spacing (D) decreases to a minimum and then is constant to the main flow boundary (48).

2. The turbomachine as set forth in claim 1, wherein the rear edges (42) have a linear profile and the front edges (44) have an arched profile.

3. The turbomachine as set forth in claim 1, wherein the rear edges (42) have an arched profile and the front edges (44) have a linear profile.

4. The turbomachine as set forth in claim 1, wherein the rear edges (42) and the front edges (44) have an arched profile.

5. The turbomachine as set forth in claim 1, wherein the rear edges (42) and/or the front edges (44) have both at least one arched profile and at least one linear profile.

6. The turbomachine as set forth in any one of the preceding claims, wherein the edge profile in the direction of the main flow boundaries (48) is identical or varied.

7. The turbomachine as set forth in any one of the preceding claims, wherein the rear edges (42) and the front edges (44) intersect the center of the main flow path (46) at an angle of ϕ=90° or ϕ≠90°.

## Revendications

1. Turbomachine avec au moins un groupe de rangées d'aubes, lequel est disposé dans un circuit principal de courant et qui présente au moins deux rangées d'aubes avoisinantes vu en direction du courant principal, dotées respectivement d'une pluralité d'aubes (38, 40), **caractérisée en ce que** les arêtes arrière (42) des aubes (38) de la rangée d'aubes en amont du courant et les arêtes avant (44) des aubes (40) de la rangée d'aube en aval du courant sont disposées à une distance d'arête axiale (D), qui décroît à partir d'un centre du circuit de courant principal (46) en direction des deux limites de courant principal (48),
ladite distance d'arête (D) décroissant respectivement de façon permanente en direction d'un minimum situé à la limite de courant principal (48) ;
ou la distance d'arête (D) décroissant jusqu'à un minimum puis augmentant en direction de la limite de courant principal (48), ladite distance d'arête (D) étant, à la limite de courant principal (48), inférieure ou égale à la distance d'arête (D) au centre du circuit de courant principal (46) ;
ou la distance d'arête (D) décroissant jusqu'à un minimum puis passant de manière constante jusqu'à la limite de courant principal (48).

2. Turbomachine selon la revendication 1, selon laquelle les arêtes arrière (42) ont un parcours linéaire et les arêtes avant (44) un parcours en forme de courbe.

3. Turbomachine selon la revendication 1, selon laquelle les arêtes arrière (42) ont un parcours en forme de courbe et les arêtes avant (44) un parcours linéaire.

4. Turbomachine selon la revendication 1, selon laquelle les arêtes arrière (42) et les arêtes avant (44) ont un parcours en forme de courbe.

5. Turbomachine selon la revendication 1, selon laquelle les arêtes arrière (42) et/ou les arêtes avant (44) ont autant au moins un parcours en forme de courbe qu'au moins un parcours linéaire.

6. Turbomachine selon l'une des revendications précédentes, selon laquelle le parcours des arêtes est identique ou varie en direction des limites de courant principal (48).

7. Turbomachine selon l'une des revendications précédentes, selon laquelle les arêtes arrières (42) et les arêtes avant (44) coupent le centre du circuit de courant principal (46) dans un angle ϕ=90° ou ϕ≠90°.
